(19) Europäisches Patentamt
European Patent Office
Office européen des brevets

(11) **EP 4 491 665 A1**

(12) **EUROPEAN PATENT APPLICATION**
published in accordance with Art. 153(4) EPC

(43) Date of publication:
**15.01.2025 Bulletin 2025/03**

(21) Application number: **23766361.2**

(22) Date of filing: **31.01.2023**

(51) International Patent Classification (IPC):
*C08K 5/04* (2006.01)        *C08L 101/00* (2006.01)
*C08L 101/06* (2006.01)        *C04B 35/111* (2006.01)
*C04B 35/569* (2006.01)        *C04B 35/626* (2006.01)
*C04B 35/634* (2006.01)        *C08K 3/10* (2018.01)
*C08K 3/14* (2006.01)        *C08K 3/20* (2006.01)

(52) Cooperative Patent Classification (CPC):
**C04B 35/111; C04B 35/565; C04B 35/626;**
**C04B 35/634; C08K 3/10; C08K 3/14; C08K 3/20;**
**C08K 5/04; C08L 101/00; C08L 101/06**

(86) International application number:
**PCT/JP2023/003069**

(87) International publication number:
**WO 2023/171181 (14.09.2023 Gazette 2023/37)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **11.03.2022 JP 2022038109**

(71) Applicant: **Fujimi Incorporated**
**Kiyosu-shi, Aichi 452-8502 (JP)**

(72) Inventors:
• **FUJIMOTO, Yuki**
**Kiyosu-shi, Aichi 452-8502 (JP)**

• **TAGUCHI, Souma**
**Kiyosu-shi, Aichi 452-8502 (JP)**
• **NAKAMURA, Tomoaki**
**Kiyosu-shi, Aichi 452-8502 (JP)**
• **MIWA, Naoya**
**Kiyosu-shi, Aichi 452-8502 (JP)**
• **ASHITAKA, Keiji**
**Kiyosu-shi, Aichi 452-8502 (JP)**

(74) Representative: **Grünecker Patent- und**
**Rechtsanwälte**
**PartG mbB**
**Leopoldstraße 4**
**80802 München (DE)**

(54) **DISPERSION FOR SINTERED-CERAMIC OBJECT FORMATION, GREEN SHEET FOR SINTERED-CERAMIC OBJECT FORMATION, PREPREG FOR SINTERED-CERAMIC OBJECT FORMATION, AND SINTERED CERAMIC OBJECT**

(57)     The present invention provides a means for preventing the occurrence of bleeding-out of some components during the formation of a ceramic sintered body in a dispersion for forming a ceramic sintered body containing ceramic particles, a resin, and a plasticizer. The present disclosure relates to a dispersion for forming a ceramic sintered body, containing components (A) to (D) below and having a pH at 25°C of 4.0 or more:
a component (A): ceramic particles,
a component (B): a resin,
a component (C): a plasticizer, and
a component (D): water.

EP 4 491 665 A1

**Description**

**TECHNICAL FIELD**

The present invention relates to a dispersion for forming a ceramic sintered body, a green sheet for forming a ceramic sintered body, a prepreg material for forming a ceramic sintered body, and a ceramic sintered body.

**BACKGROUND ART**

A ceramic material has an advantage such as excellence in hardness, mechanical strength, heat resistance, impact resistance, abrasion resistance, oxidation resistance, or corrosion resistance, or a small thermal expansion coefficient depending on the type of ceramic material. For this reason, a ceramic material is expected to be applied to various applications such as electronic components and high-temperature structural members. In addition, a composite material containing a ceramic has been studied for the purpose of further enhancing the functionality and/or improving the production efficiency. Examples of the composite material containing a ceramic include a composite material of a plurality of ceramics, a composite material of a ceramic and another material, and the like. Examples of such a ceramic material include those formed using a dispersion containing a ceramic.

For example, WO 2012/077787 A (corresponding to US 2013/0316891 A) discloses an oxide matrix composite material obtained by subjecting a fiber made of an oxide or a composite oxide with a matrix made of an oxide or a composite oxide to composite formation. Further, as a method for producing the composite material, it is disclosed that a fiber sheet is impregnated with a dispersion in which a powder of a matrix component is dispersed, followed by drying and firing.

For example, JP 2008-024585 A (corresponding to US 2010/0081556 A) discloses a mullite-alumina ceramic matrix containing a ceramic powder mixture having a mullite-alumina powder and an alumina precursor solution. Further, an oxide-based ceramic matrix composite material obtained by impregnating ceramic fibers with a ceramic powder matrix is disclosed.

For example, JP 2017-222544 A discloses a ceramic matrix composite material containing an aggregate made of mullite fibers and a matrix made of mullite with which spaces between the mullite fibers are filled. In addition, as a method for producing a ceramic matrix composite material, a method including impregnating mullite fibers constituting an aggregate with a mullite precursor solution and filling spaces between fibers of the mullite fibers with a matrix made of mullite is disclosed.

Peng-Yuan Lee and Toyohiko Yano, "The Influence of Matrix and Fiber/Matrix Interface on Mechanical Properties of Alumina/Alumina Composites", Journal of the Ceramic Society of Japan, Supplement 112-1, PacRim5 Special Issue, 112 [5] S333-S337 (2004) discloses that $Al_2O_3$ fibers or $Al_2O_3$ fibers coated with monazite ($LaPO_4$) are immersed in a dispersion containing $\alpha$-$Al_2O_3$ or a dispersion containing $\alpha$-$Al_2O_3$ and monazite, and then dried and hot-pressed to produce a composite material.

**SUMMARY OF INVENTION**

However, the present inventors have found that in the methods for producing a ceramic material described in WO 2012/077787 A (corresponding to US 2013/0316891 A), JP 2008-024585 A (corresponding to US 2010/0081556 A), JP 2017-222544 A, and Peng-Yuan Lee and Toyohiko Yano, "The Influence of Matrix and Fiber/Matrix Interface on Mechanical Properties of Alumina/Alumina Composites", Journal of the Ceramic Society of Japan, Supplement 112-1, PacRim5 Special Issue, 112 [5] S333-S337 (2004), bleeding-out of some components occurs during the formation of a ceramic sintered body using a dispersion containing a ceramic or a dispersion containing a ceramic precursor to cause a problem that non-uniformity of components occurs.

Therefore, an object of the present invention is to provide a means for preventing the occurrence of bleeding-out of some components during the formation of a ceramic sintered body in a dispersion for forming a ceramic sintered body containing ceramic particles, a resin, and a plasticizer.

One aspect which can solve the above-mentioned problem of the present invention relates to a dispersion for forming a ceramic sintered body, containing components (A) to (D) below and having a pH at 25°C of 4.0 or more:

a component (A): ceramic particles,
a component (B): a resin,
a component (C): a plasticizer, and
a component (D): water.

## DESCRIPTION OF EMBODIMENTS

Hereinafter, embodiments of the present invention will be described, but the present invention is not limited only to the following embodiments, and various modifications can be made within the scope of claims. The embodiments described in the present description may be arbitrarily combined to form other embodiments.

In the present description, unless otherwise specified, operations and measurements of physical properties and the like are performed under conditions of room temperature (20°C or higher and 25°C or lower)/relative humidity of 40% RH or more and 50% RH or less.

<Dispersion for forming ceramic sintered body>

One aspect of the present invention relates to a dispersion for forming a ceramic sintered body, containing components (A) to (D) below and having a pH at 25°C of 4.0 or more:

a component (A): ceramic particles,
a component (B): a resin,
a component (C): a plasticizer, and
a component (D): water. That is, the aspect relates to a dispersion for forming a ceramic sintered body, containing ceramic particles, a resin, a plasticizer, and water, and having a pH at 25°C of 4.0 or more. According to the present aspect, a means for preventing the occurrence of bleeding-out of some components during the formation of a ceramic sintered body in a dispersion for forming a ceramic sintered body containing ceramic particles, a resin, and a plasticizer can be provided.

The present inventors presume a mechanism for solving the above-mentioned problem by the present invention as follows.

In WO 2012/077787 A (corresponding to US 2013/0316891 A), JP 2008-024585 A (corresponding to US 2010/0081556 A), JP 2017-222544 A, and Peng-Yuan Lee and Toyohiko Yano, "The Influence of Matrix and Fiber/Matrix Interface on Mechanical Properties of Alumina/Alumina Composites", Journal of the Ceramic Society of Japan, Supplement 112-1, PacRim5 Special Issue, 112 [5] S333-S337 (2004), the pH range of a dispersion containing a ceramic or a dispersion containing a ceramic precursor is not limited, and a ceramic sintered body is sometimes formed using a dispersion having a pH equal to or less than a certain value. However, in a case where the dispersion contains ceramic particles, a resin, and a plasticizer, when the pH is equal to or less than a certain value, the resin is decomposed in the dispersion to reduce the molecular weight. Then, in an unsintered intermediate material such as a green sheet or a prepreg material formed using this dispersion, elimination of the three-dimensional network of the resin easily proceeds. As a result, the effect of preventing diffusion of other added components by the resin is weakened, and diffusion of at least the plasticizer easily occurs, so that bleeding-out easily occurs. On the other hand, the dispersion for forming a ceramic sintered body according to an aspect of the present invention contains ceramic particles, a resin, a plasticizer, and water, and the pH at 25°C of the dispersion is limited to 4.0 or more. As a result, decomposition of the resin is less likely to occur, and the three-dimensional network of the resin is more favorably maintained, so that bleeding-out is prevented.

The mechanism is based on presumption, and whether it is correct or incorrect does not affect the technical scope of the present invention.

[Component (A): ceramic particles]

The dispersion for forming a ceramic sintered body according to an embodiment of the present invention contains ceramic particles as the component (A). In the present description, the ceramic particles refer to particles containing a ceramic. The component (A) constitutes at least a part of a ceramic sintered body formed using the dispersion for forming a ceramic sintered body.

The content of the ceramic with respect to the total mass of the ceramic particles that can be used as the component (A) is not particularly limited, but is preferably 50 mass% or more, more preferably 70 mass% or more, and still more preferably 90 mass% or more (upper limit: 100 mass%). The content of the ceramic can be evaluated based on a change in weight measured by thermogravimetric analysis.

The ceramic contained in the ceramic particles that can be used as the component (A) is not particularly limited. Examples of the ceramic contained in the ceramic particles include a compound made only of carbon, an oxide, a hydroxide, a carbide, a carbonate, a nitride, a halide, a phosphates, a boride, and the like. The oxide is not particularly limited, but examples thereof include silicon oxide, aluminum oxide (alumina, $Al_2O_3$), mullite, copper oxide, iron oxide, nickel oxide, tin oxide, cadmium oxide, zinc oxide, zirconium oxide, and the like. The hydroxide is not particularly limited, but examples thereof include aluminum hydroxide ($Al(OH)_3$) and the like. The carbide is not particularly limited, but examples thereof include silicon carbide (SiC), boron carbide, and the like. The nitride is not particularly limited, but examples thereof include silicon nitride, gallium nitride, titanium nitride, lithium nitride, and the like. Further, examples of the ceramic contained in the ceramic particles include oxides or composite oxides of Si, Ti, Zr, Mg, Hf, Al, and a rare earth element described in WO 2012/077787 A, and the like. The ceramic particles may contain one of these ceramics alone or two or more of these ceramics in combination.

In a preferred embodiment of the present invention, the component (A) contains ceramic particles containing at least one selected from the group consisting of an oxide, a carbide, a nitride, and a boride. The ratio of the content of the ceramic particles containing at least one selected from the group consisting of an oxide, a carbide, a nitride, and a boride to the total mass of the component (A) is preferably 50 mass% or more, and more preferably 90 mass% or more (upper limit: 100 mass%). The ceramic particles as the component (A) are still more preferably ceramic particles containing at least one selected from the group consisting of an oxide, a carbide, a nitride, and a boride.

In a more preferred embodiment of the present invention, the component (A) contains ceramic particles containing at least one selected from the group consisting of an oxide and a carbide. The ratio of the content of the ceramic particles containing at least one selected from the group consisting of an oxide and a carbide to the total mass of the component (A) is preferably 50 mass% or more, and more preferably 90 mass% or more (upper limit: 100 mass%) with respect to the total mass of the component (A). The ceramic particles as the component (A) are still more preferably ceramic particles containing at least one selected from the group consisting of an oxide and a carbide.

In a still more preferred embodiment of the present invention, the ceramic particles containing a carbide contain ceramic particles containing silicon carbide. The ratio of the content of the ceramic particles containing silicon carbide to the total mass of the ceramic particles containing a carbide is preferably 50 mass% or more, and more preferably 90 mass% or more (upper limit: 100 mass%). The ceramic particles containing a carbide in the component (A) are still more preferably ceramic particles containing silicon carbide.

In a still more preferred embodiment of the present invention, the ceramic particles containing an oxide contain ceramic particles containing at least one selected from the group consisting of alumina and mullite. The ratio of the content of the ceramic particles containing at least one selected from the group consisting of alumina and mullite to the total mass of the ceramic particles containing an oxide is preferably 50 mass% or more, and more preferably 90 mass% or more (upper limit: 100 mass%). The ceramic particles containing an oxide in the component (A) are still more preferably ceramic particles containing at least one selected from the group consisting of alumina and mullite.

The ceramic particles that can be used as the component (A) may be uncoated particles, particles coated with a coating layer (coated particles), or a combination thereof. Here, the term "coated" means that at least a part of the particle is coated with a coating layer. The coating layer is not particularly limited, but a coating layer containing aluminum hydroxide is preferred. The coating method is not particularly limited, and a known method can be used. The silicon carbide particles coated with a coating layer containing aluminum hydroxide are not particularly limited, but can be produced, for example, by appropriately adopting a known method and conditions described in WO 2019/065956 A or the like. Further, the composition and structure of the coated particle can be analyzed by, for example, SEM (Scanning Electron Microscope)-EDX (Energy Dispersive X-ray Spectroscopy) observation, TEM (Transmission Electron Microscope)-EDX (Energy Dispersive X-ray Spectroscopy) observation, EELS (Electron Energy Loss Spectroscopy) analysis, or the like, if necessary, by combining a plurality of measurements.

The ceramic particles that can be used as the component (A) may be subjected to a surface treatment. The type, method, or the like of the surface treatment is not particularly limited, and a known type, method, or the like of a surface treatment can be appropriately adopted.

Preferred examples of the component (A) include oxide particles, carbide particles, oxide particles coated with a coating layer, carbide particles coated with a coating layer, and the like. Specific examples include, but are not particularly limited to, silicon oxide particles, mullite particles, alumina particles, copper oxide particles, iron oxide particles, nickel oxide particles, tin oxide particles, cadmium oxide particles, zinc oxide particles, zirconium oxide particles, silicon carbide particles, boron carbide particles, these particles coated with a coating layer, and the like. Among them, mullite particles, alumina particles, silicon carbide particles, and silicon carbide particles coated with a coating layer containing aluminum hydroxide (aluminum hydroxide-coated SiC particles) are more preferred. Further, alumina particles, silicon carbide particles, and silicon carbide particles coated with a coating layer containing aluminum hydroxide (aluminum hydroxide-coated SiC particles) are still more preferred. Then, alumina particles are particularly preferred. In addition, aluminum hydroxide-coated SiC particles are particularly preferred.

The shape of the ceramic particles that can be used as the component (A) is not particularly limited, and may be a spherical shape or a non-spherical shape. Specific examples of the non-spherical shape include various shapes such as a polygonal columnar shape such as a triangular prism or a quadrangular prism, a cylindrical shape, a straw bag shape in which a central portion of a cylinder is bulged more than the end portions, a doughnut shape in which a central portion of a disk is perforated, a plate shape, a so-called cocoon shape having a constriction at a central portion, a so-called associative spherical shape in which a plurality of particles are integrated, a rosary-like shape in which a plurality of particles are connected almost in a line, a so-called kompeito shape having a plurality of protrusions on a surface, a rugby ball shape, and a needle shape thinner than the rugby ball shape, and are not particularly limited.

The average primary particle size of the ceramic particles that can be used as the component (A) is not particularly limited, but is preferably 0.001 um or more, more preferably 0.005 um or more, and still more preferably 0.01 um or more. Within these ranges, aggregation of the ceramic particles is further prevented, and a dispersion having higher dispersibility is obtained. The average primary particle size of the ceramic particles that can be used as the component (A) is not particularly limited, but is preferably 2.0 um or less, more preferably 1.5 um or less, still more preferably 1.0 um or less, and particularly preferably 0.5 um or less. Within these ranges, sedimentation of the ceramic particles is further prevented, and a dispersion having higher dispersibility is obtained. The average primary particle size of the ceramic particles can be calculated on the assumption that the shape of the ceramic particles is a true sphere, using the value of the true density of the ceramic particles, based on the average value of the specific surface area (SA) of the ceramic particles calculated from the values continuously measured three times by the BET method. The measurement of specific surface area of the ceramic particles can be performed using, for example, FlowSorb II 2300 manufactured by Micromeritics Instrument Corporation. From these, examples of the range of the average primary particle size of the ceramic particles that can be used as the component (A) include, but are not limited to, 0.001 $\mu$m or more and 2.0 $\mu$m or less, 0.005 $\mu$m or more and 1.5 $\mu$m or less, 0.01 $\mu$m or more and 1.0 $\mu$m or less, 0.01 $\mu$m or more and 0.5 $\mu$m or less, and the like. Thus, in a preferred embodiment of the present invention, the component (A) is ceramic particles having an average primary particle size within the above range.

The average secondary particle size of the ceramic particles that can be used as the component (A) is not particularly limited, but is preferably 0.01 $\mu$m or more, more preferably 0.03 $\mu$m or more, still more preferably 0.05 $\mu$m or more, and particularly preferably 0.1 $\mu$m or more. Within these ranges, the possibility of occurrence of excessive thickening of the dispersion is further reduced, and a dispersion more suitable for coating or impregnation is obtained. The average secondary particle size of the ceramic particles that can be used as the component (A) is not particularly limited, but is preferably 3 $\mu$m or less, more preferably 2 $\mu$m or less, still more preferably 1.5 $\mu$m or less, and particularly preferably 1 $\mu$m or less. Within these ranges, sedimentation of the ceramic particles is further prevented, and a dispersion having higher dispersibility is obtained. The value of the average secondary particle size of the ceramic particles can be measured by a scattering particle size distribution measuring apparatus LA-950 manufactured by HORIBA, Ltd. From these, examples of the range of the average secondary particle size of the ceramic particles that can be used as the component (A) include, but are not limited to, 0.01 $\mu$m or more and 3 $\mu$m or less, 0.03 $\mu$m or more and 2 $\mu$m or less, 0.05 $\mu$m or more and 1.5 $\mu$m or less, 0.1 $\mu$m or more and 1 $\mu$m or less, and the like. Thus, in a preferred embodiment of the present invention, the component (A) is ceramic particles having an average secondary particle size within the above range.

As the component (A), a commercially available product may be used, or a synthetic product may be used. When the ceramic particles are coated particles, as particles before coating to serve as a raw material of the coated particles, a commercially available product may be used, or a synthetic product may be used. The commercially available product is not particularly limited, but examples thereof include product name: WA #30000 and product name: GC #40000 manufactured by FUJIMI INCORPORATED, and the like.

As the component (A), one type of ceramic particles may be used alone, or two or more types of ceramic particles may be used in combination.

The content of the component (A) in the dispersion for forming a ceramic sintered body is not particularly limited, but is preferably 0.1 mass% or more, more preferably 1 mass% or more, and still more preferably 10 mass% or more with respect to the total mass of the dispersion for forming a ceramic sintered body. Within this range, the amount of other components removed in drying, degreasing, or the like is further reduced, so that a dispersion more excellent in terms of production cost is obtained. The content of the component (A) in the dispersion for forming a ceramic sintered body is not particularly limited, but is preferably 90 mass% or less, more preferably 80 mass% or less, and still more preferably 75 mass% or less with respect to the total mass of the dispersion for forming a ceramic sintered body. Within this range, the possibility of occurrence of excessive thickening of the dispersion is further reduced, and a dispersion more suitable for coating or impregnation is obtained. From these, examples of the range of the content of the component (A) in the dispersion for forming a ceramic sintered body include, but are not limited to, 0.1 mass% or more and 90 mass% or less, 1 mass% or more and 80 mass% or less, 10 mass% or more and 75 mass% or less, and the like, with respect to the total mass of the dispersion for forming a ceramic sintered body.

The dispersion for forming a ceramic sintered body may contain particles containing boron nitride (BN), but may be substantially free of particles containing BN, or may be completely free of particles containing BN. In the present description, the phrase "substantially free of particles containing BN" means that the content of the particles containing BN in the dispersion for forming a ceramic sintered body is less than 0.1 mass% with respect to the total mass of the dispersion for forming a ceramic sintered body. The dispersion for forming a ceramic sintered body may contain particles containing silicon carbide (SiC), but may be substantially free of particles containing SiC, or may be completely free of particles containing SiC. In the present description, the phrase "substantially free of particles containing SiC" means that the content of the particles containing SiC in the dispersion for forming a ceramic sintered body is less than 0.1 mass% with respect to the total mass of the dispersion for forming a ceramic sintered body. The dispersion for forming a ceramic sintered body may contain aluminum hydroxide-coated SiC particles, but may be substantially free of aluminum hydroxide-coated SiC particles or may be completely free of aluminum hydroxide-coated SiC particles. In the present description, the phrase "substantially free of aluminum hydroxide-coated SiC particles" means that the content of the aluminum hydroxide-coated SiC particles in the dispersion for forming a ceramic sintered body is less than 0.1 mass% with respect to the total mass of the dispersion for forming a ceramic sintered body.

[Component (B): resin]

The dispersion for forming a ceramic sintered body according to an embodiment of the present invention contains a resin as the component (B). The component (B) constitutes a binder (binder resin) of a green sheet formed using the dispersion for forming a ceramic sintered body, and can enhance the moldability of the green sheet. In addition, the component (B) constitutes a part of a prepreg material formed using the dispersion for forming a ceramic sintered body, and can enhance the handleability of the prepreg material.

The component (B) is not particularly limited, and a known resin can be used. Among them, a resin having a hydroxy group (hereinafter also referred to as component (B1)) is preferred from the viewpoint that excellent dispersibility and high stability over time can be obtained under the condition of a pH at 25°C of 4.0 or more. Preferred examples of the component (B1) include polyvinyl alcohol (PVA); a modified polyvinyl alcohol (modified PVA) such as polyvinyl butyral (PVB), polyvinyl propyral, polyvinyl acetal, or polyvinyl formal; a hydroxy group-containing glyoxal resin; a hydroxy group-containing acrylic resin; a phenol resin; a hydroxy group-containing polyvinylpyrrolidone (PVP); a hydroxy group-containing polyester; a hydroxy group-containing silicone; a hydroxy group-containing polycarboxylic acid; and the like, but the component (B1) is not limited to these. Among them, from the viewpoint of ease of handling and ease of viscosity adjustment, polyvinyl alcohol and a modified polyvinyl alcohol are more preferred, polyvinyl alcohol, polyvinyl butyral, and polyvinyl acetal are still more preferred, and polyvinyl acetal is particularly preferred.

In a preferred embodiment of the present invention, the component (B) contains the component (B1): a resin having a hydroxy group. The content ratio of the component (B1) to the total mass of the component (B) is preferably 50 mass% or more, and more preferably 90 mass% or more (upper limit: 100 mass%). The resin as the component (B) is still more preferably the component (B1) .

In a more preferred embodiment of the present invention, the component (B1): a resin having a hydroxy group contains at least one or more resins (hereinafter also referred to as component (B2)) selected from the group consisting of polyvinyl alcohol (PVA), polyvinyl butyral (PVB), polyvinyl propyral, polyvinyl acetal, polyvinyl formal, a hydroxy group-containing glyoxal resin, a hydroxy group-containing acrylic resin, a phenol resin, a hydroxy group-containing polyvinylpyrrolidone (PVP), a hydroxy group-containing polyester, a hydroxy group-containing silicone, and a hydroxy group-containing polycarboxylic acid. The content ratio of the component (B2) to the total mass of the component (B1) is preferably 50 mass% or more, and more preferably 90 mass% or more (upper limit: 100 mass%). The component (B1): a resin having a hydroxy group in the component (B) is still more preferably the component (B2). The resin as the component (B) is particularly preferably the component (B2).

The weight average molecular weight of the resin that can be used as the component (B) is not particularly limited, but is preferably 1,000 or more, more preferably 2,000 or more, and still more preferably 5,000 or more. Within these ranges, a dispersion more excellent in moldability of a green sheet, a prepreg material, or the like is obtained. The weight average molecular weight of the resin that can be used as the component (B) is not particularly limited, but is preferably 500,000 or less, more preferably 100,000 or less, and still more preferably 50,000 or less. Within these ranges, the possibility of occurrence of excessive thickening of the dispersion is further reduced, and a dispersion more suitable for coating or impregnation is obtained. The value of the weight average molecular weight of the resin can be measured by gel permeation chromatography (GPC), and specifically, can be measured by the method described in examples. From these, examples of the range of the weight average molecular weight of the resin that can be used as the component (B) include, but are not limited to, 1,000 or more and 500,000 or less, 2,000 or more and 100,000 or less, 5,000 or more and 50,000 or less, and the like. Thus, in a preferred embodiment of the present invention, the component (B) is a resin having a weight average molecular weight within the above range.

As the component (B), a commercially available product may be used, or a synthetic product may be used. The commercially available product is not particularly limited, but examples thereof include product name: S-LEC (registered trademark) KW-3 manufactured by Sekisui Chemical Co., Ltd., and the like.

As the component (B), one type of resin may be used alone, or two or more types of resins may be used in combination.

The content of the component (B) in the dispersion for forming a ceramic sintered body is not particularly limited, but is preferably 0.01 mass% or more, more preferably 0.1 mass% or more, and still more preferably 1 mass% or more with respect to the total mass of the dispersion for forming a ceramic sintered body. Within this range, a dispersion more excellent in moldability of a green sheet is obtained. The content of the component (B) in the dispersion for forming a ceramic sintered body is not particularly limited, but is preferably 50 mass% or less, more preferably 30 mass% or less, and still more preferably 20 mass% or less with respect to the total mass of the dispersion for forming a ceramic sintered body. Within this range, the amount of other components removed in drying, degreasing, or the like is further reduced, so that a dispersion more excellent in terms of production cost is obtained. From these, examples of the range of the content of the component (B) in the dispersion for forming a ceramic sintered body include, but are not limited to, 0.01 mass% or more and 50 mass% or less, 0.1 mass% or more and 30 mass% or less, 1 mass% or more and 20 mass% or less, and the like with respect to the total mass of the dispersion for forming a ceramic sintered body.

The content ratio between the component (A) and the component (B) described later is not particularly limited. The content of the component (B) is preferably 0.1 parts by mass or more, more preferably 1 part by mass or more, still more preferably 2.5 parts by mass or more, and particularly preferably 5 parts by mass or more with respect to 100 parts by mass of the component (A). Within this range, a dispersion more excellent in moldability of a green sheet, a prepreg material, or the like is obtained. The content of the component (B) is preferably 1,000 parts by mass or less, more preferably 100 parts by mass or less, and still more preferably 50 parts by mass or less with respect to 100 parts by mass of the component (A). Within this range, the amount of the resin component removed in degreasing is further reduced, so that a dispersion more excellent in terms of production cost is obtained. From these, examples of the content of the component (B) include 0.1 parts by mass or more and 1,000 parts by mass or less, 1 part by mass or more and 100 parts by mass or less, 2.5 parts by mass or more and 50 parts by mass or less, 5 parts by mass or more and 50 parts by mass or less, and the like with respect to 100 parts by mass of the component (A), but the content of the component (B) is not limited to these.

[Component (C): plasticizer]

The dispersion for forming a ceramic sintered body according to an embodiment of the present invention contains a plasticizer as the component (C). The component (C) constitutes a part of a green sheet, a prepreg material, or the like formed using the dispersion for forming a ceramic sintered body, and can enhance the flexibility of the green sheet, the prepreg material, or the like.

In the present description, the plasticizer refers to a compound having a function of enhancing the flexibility of an unsintered intermediate material such as a green sheet or a prepreg material formed using the dispersion for forming a ceramic sintered body.

The plasticizer is preferably a compound capable of making breakage less likely to occur when a green sheet formed using the dispersion further containing the plasticizer is bent at a certain bending angle as compared with a green sheet formed using the dispersion not containing the plasticizer. The bending angle is not particularly limited as long as a difference in flexibility can be observed. However, as the plasticizer, it is particularly preferred that when a green sheet is bent at an angle of 170° or more (for example, 170°), a green sheet containing a compound used as the plasticizer can be prevented from being broken in a case where a green sheet containing no compound used as the plasticizer is broken. As for the bending position, bending can be performed, for example, at the center position of the long side of the green sheet, but the bending position is not limited to this position. Examples of the green sheet used for bending include a green sheet having a long side of 5 cm × a short side of 1.5 cm × a thickness of 150 μm, but the size is not limited to this size.

The component (C) is not particularly limited, and a known plasticizer can be used. Among them, from the viewpoint of the dispersibility of the plasticizer in the dispersion, preferred examples of the component (C) include water-soluble plasticizers such as ethylene glycol, diethylene glycol, triethylene glycol, polyethylene glycol, glycerin, and triethanolamine; plasticizers of a type which are insoluble in water and transfer to an emulsion, such as a phthalate-based plasticizer like dibutyl phthalate; and the like, but the component (C) is not limited to these. From the same viewpoint, as the component (C), a water-soluble plasticizer is more preferred, a water-soluble plasticizer which is a multimer is still more preferred, diethylene glycol, triethylene glycol, and polyethylene glycol are even more preferred, and polyethylene glycol is particularly preferred. Diethylene glycol, triethylene glycol, and polyethylene glycol are multimers of two, three, and four or more ethylene glycols, respectively.

In a preferred embodiment of the present invention, the component (C) contains at least one compound (hereinafter also referred to as component (C1)) selected from the group consisting of ethylene glycol, diethylene glycol, triethylene glycol, polyethylene glycol, glycerin, triethanolamine, and dibutyl phthalate. The content ratio of the component (C1) to the total mass of the component (C) is preferably 50 mass% or more, and more preferably 90 mass% or more (upper limit: 100 mass%). The plasticizer as the component (C) is still more preferably the component (C1).

In another preferred embodiment of the present invention, the component (C) contains a water-soluble plasticizer that is a multimer. The content ratio of the water-soluble plasticizer that is a multimer to the total mass of the component (C) is preferably 50 mass% or more, and more preferably 90 mass% or more (upper limit: 100 mass%). The plasticizer as the component (C) is still more preferably a water-soluble plasticizer that is a multimer.

In a more preferred embodiment of the present invention, the component (C) contains at least one compound selected from the group consisting of diethylene glycol, triethylene glycol, and polyethylene glycol. The content ratio of at least one compound selected from the group consisting of diethylene glycol, triethylene glycol, and polyethylene glycol with respect to the total mass of the component (C) is preferably 50 mass% or more, and more preferably 90 mass% or more (upper limit: 100 mass%). The plasticizer as the component (C) is still more preferably at least one compound selected from the group consisting of diethylene glycol, triethylene glycol, and polyethylene glycol.

The molecular weight of the plasticizer that can be used as the component (C) is not particularly limited, but is preferably smaller than the molecular weight of the resin. The total atomic mass of the plasticizer is preferably less than 1,000. For example, when the hydroxyl value measurement of the plasticizer can be performed by a neutralization titration method, the average molecular weight calculated from the result of the hydroxyl value measurement of the plasticizer by a neutralization titration method is preferably less than 1,000. The average molecular weight calculated from the result of the hydroxyl value measurement of the plasticizer by a neutralization titration method can be calculated based on JIS K 0070:1992. Within these ranges, the effect of the plasticizer is further improved.

In a preferred embodiment of the present invention, it is preferred that the component (B): the resin is a resin having a weight average molecular weight of 1,000 or more, and the component (C): the plasticizer is a plasticizer having an average molecular weight, calculated from the result of the hydroxyl value measurement by a neutralization titration method, of less than 1,000.

As the plasticizer that can be used as the component (C), a commercially available product may be used, or a synthetic product may be used. The commercially available product is not particularly limited, but examples thereof include product name: polyethylene glycol 200 manufactured by FUJIFILM Wako Pure Chemical Corporation, and the like.

As the component (C), one type of plasticizer may be used alone, or two or more types of plasticizers may be used in combination.

The content of the component (C) in the dispersion for forming a ceramic sintered body is not particularly limited, but is preferably 0.01 mass% or more, more preferably 0.1 mass% or more, and still more preferably 1 mass% or more with respect to the total mass of the dispersion for forming a ceramic sintered body. Within this range, the green sheet, the prepreg material, and the like are excellent in flexibility. The content of the component (C) in the dispersion for forming a ceramic sintered body is not particularly limited, but is preferably 50 mass% or less, more preferably 25 mass% or less, and still more preferably 10 mass% or less with respect to the total mass of the dispersion for forming a ceramic sintered body. Within this range, the amount of the plasticizer component removed in degreasing is further reduced, so that a dispersion more excellent in terms of production cost is obtained. From these, examples of the content of the component (C) in the dispersion for forming a ceramic sintered body include 0.01 mass% or more and 50 mass% or less, 0.1 mass% or more and 25 mass% or less, 1 mass% or more and 10 mass% or less, and the like with respect to the total mass of the dispersion for forming a ceramic sintered body, but the content of the component (C) in the dispersion for forming a ceramic sintered body is not limited to these.

The content ratio between the component (C) and the component (A) is not particularly limited. The content of the component (C) is preferably 0.1 parts by mass or more, more preferably 1 part by mass or more, and still more preferably 2.5 parts by mass or more with respect to 100 parts by mass of the component (A). Within this range, the green sheet, the prepreg material, and the like are excellent in flexibility. The content of the component (C) is preferably 1,000 parts by mass or less, more preferably 100 parts by mass or less, and still more preferably 50 parts by mass or less with respect to 100 parts by mass of the component (A). Within this range, the amount of the plasticizer component removed in degreasing is further reduced, so that a dispersion more excellent in terms of production cost is obtained. From these, examples of the content of the component (C) include 0.1 parts by mass or more and 1,000 parts by mass or less, 1 part by mass or more and 100 parts by mass or less, 2.5 parts by mass or more and 50 parts by mass or less, and the like with respect to 100 parts by mass of the component (A), but the content of the component (C) is not limited to these.

[Component (D): water]

The dispersion for forming a ceramic sintered body according to an embodiment of the present invention contains water as the component (D). The component (D) is preferably water that contains as few impurities as possible. For example, water having a total content of transition metal ions of 100 ppb or less is preferred. Here, the purity of water that can be used as the component (D) can be increased by, for example, an operation such as removal of impurity ions using an ion exchange resin, removal of foreign substances by a filter, or distillation. Specifically, as the component (D), for example, deionized water (ion exchanged water), pure water, ultrapure water, distilled water, or the like is preferably used.

[Component (E): acid]

The dispersion for forming a ceramic sintered body according to an embodiment of the present invention may further contain an acid as a component (E). The component (E) is preferably used as a pH adjusting agent, and the pH of the dispersion can be further lowered by the component (E).

The component (E) is not particularly limited, and a known acid can be used. Examples of the component (E) include an organic acid and an inorganic acid. The acid is preferably an acid that is not a multimer. The acid that is not a multimer is preferably a compound having a total atomic mass of less than 1,000.

The organic acid is not particularly limited, but examples thereof include carboxylic acids such as formic acid, acetic acid, propionic acid, butyric acid, valeric acid, 2-methylbutyric acid, n-hexanoic acid, 3,3-dimethylbutyric acid, 2-ethylbutyric acid, 4-methylpentanoic acid, n-heptanoic acid, 2-methylhexanoic acid, n-octanoic acid, 2-ethylhexanoic acid, benzoic acid, glycolic acid, salicylic acid, glyceric acid, oxalic acid, malonic acid, succinic acid, glutaric acid, adipic acid, pimelic acid, maleic acid, phthalic acid, malic acid, tartaric acid, citric acid, lactic acid, diglycolic acid, 2-furancarboxylic acid, 2,5-furandicarboxylic acid, 3-furancarboxylic acid, 2-tetrahydrofurancarboxylic acid, methoxyacetic acid, methoxyphenylacetic acid, and phenoxyacetic acid; organic sulfuric acids such as methanesulfonic acid, ethanesulfonic acid, and isethionic acid; and the like. The inorganic acid is not particularly limited, but examples thereof include carbonic acid, hydrochloric acid, nitric acid, phosphoric acid, hypophosphorous acid, phosphorous acid, phosphonic acid, sulfuric acid, boric acid, hydrofluoric acid, orthophosphoric acid, pyrophosphoric acid, polyphosphoric acid, metaphosphoric acid, hexametaphosphoric acid, and the like. Among them, an inorganic acid is preferred, nitric acid, sulfuric acid, and hydrochloric acid are more preferred, nitric acid and hydrochloric acid are still more preferred, and hydrochloric acid is particularly preferred.

In one preferred embodiment of the present invention, the acid that can be used as the component (E) contains an inorganic acid. The content ratio of the inorganic acid to the total mass of the component (E) is preferably 50 mass% or more, and more preferably 90 mass% or more (upper limit: 100 mass%). The acid as the component (E) is still more preferably an inorganic acid.

In a still more preferred embodiment of the present invention, the component (E) contains at least one acid (hereinafter also referred to as component (E1)) selected from the group consisting of carbonic acid, hydrochloric acid, nitric acid, phosphoric acid, hypophosphorous acid, phosphorous acid, phosphonic acid, sulfuric acid, boric acid, hydrofluoric acid, orthophosphoric acid, pyrophosphoric acid, polyphosphoric acid, metaphosphoric acid, and hexametaphosphoric acid. The content ratio of the component (E1) to the total mass of the component (E) is preferably 50 mass% or more, and more preferably 90 mass% or more (upper limit: 100 mass%). The acid as the component (E) is still more preferably the component (E1) .

As the component (E), a commercially available product may be used, or a synthetic product may be used.

As the component (E), one type of acid may be used alone, or two or more types of acids may be used in combination.

The content of the component (E) in the dispersion for forming a ceramic sintered body is not particularly limited, but is preferably such an amount that the pH at 25°C of the dispersion for forming a ceramic sintered body falls within a preferred range of pH at 25°C described later.

[Component (F): thickener]

The dispersion for forming a ceramic sintered body according to an embodiment of the present invention may further contain a thickener as a component (F). The viscosity of the dispersion for forming a ceramic sintered body can be adjusted by the component (F).

In the present description, the thickener refers to a compound having a function of increasing the viscosity of the dispersion for forming a ceramic sintered body.

The thickener is preferably a compound that can achieve a viscosity at 25°C of 1 Pa·s or more in a thickening effect test. In addition, the thickener is more preferably a compound that can achieve a viscosity at 25°C of 5 Pa·s or more in a thickening effect test, and still more preferably a compound that can achieve a viscosity at 25°C of 10 Pa·s or more in a thickening effect test. The component (F) preferably contains a compound as mentioned above. The compound to serve as the component (B) and the compound to serve as the component (C) are each preferably a compound achieving a viscosity at 25°C of less than 1 Pa·s in a thickening effect test. However, the compound to serve as the component (B) and the compound to serve as the component (C) are each not limited to such a compound.

The thickening effect test is performed as follows. First, an aqueous dispersion (a dispersion consisting of alumina particles and water) of alumina particles (product name: WA #30000, manufactured by FUJIMI INCORPORATED, average secondary particle size: 0.3 μm) having an alumina particle concentration of 25 mass% is prepared, and 100 g of the aqueous dispersion having an alumina particle concentration of 25 mass% is added to 5 g of an aqueous hydrochloric acid solution having a concentration of 2.5 mass% with stirring. Subsequently, to the obtained aqueous dispersion (the aqueous dispersion containing alumina particles and hydrochloric acid), a compound to be tested is added in an amount of 4 parts by mass or less with respect to 100 parts by mass of alumina particles. Then, the viscosity at 25°C of the aqueous dispersion of alumina particles after the compound to be tested is added is measured. In the thickening effect test, determination is made based on the maximum value of viscosity at 25°C when the compound to be tested is added within a range of 4 parts by mass or less with respect to 100 parts by mass of alumina particles. The viscosity of the aqueous dispersion of alumina particles can be measured in the same manner as in the case of the viscosity at 25°C of the dispersion for forming a ceramic sintered body described later.

The component (F) can further improve the moldability of a green sheet, and therefore is particularly preferably used in the dispersion for forming a ceramic sintered body used for forming a green sheet. However, the application of the dispersion for forming a ceramic sintered body containing the component (F) is not limited thereto.

The component (F) is not particularly limited, and a known thickener can be used. The thickener that can be used as the component (F) may be an ionic thickener or a nonionic thickener. The ionic thickener may be an anionic thickener or a cationic thickener. The thickener is preferably an ionic thickener, more preferably a cationic thickener, still more preferably a cationic thickener containing a polymer having a (meth)acryloyl group, even more preferably a W/O emulsion containing a poly(meth)acrylate-based cationic polymer (for example, a cationic polymer containing a (meth)acrylate structural unit), and particularly preferably a W/O emulsion containing a polymethacrylate-based cationic polymer (for example, a cationic polymer containing a methacrylate structural unit). The component (F) preferably contains a thickener as mentioned above. Here, the (meth)acryloyl group refers to a general term for an acryloyl group and a methacryloyl group. The (meth)acrylate refers to a general term for an acrylate and a methacrylate.

As the component (F), a commercially available product may be used, or a synthetic product may be used. The commercially available product is not particularly limited, but examples thereof include SENKA ACTGEL AP200, SENKA ACTGEL NS100, SENKA ACTGEL CM100, and SENKA ACTGEL CD100 manufactured by SENKA corporation, and the like.

As the component (F), one type of thickener may be used alone, or two or more types of thickeners may be used in combination.

The content of the component (F) in the dispersion for forming a ceramic sintered body is not particularly limited, but is preferably such an amount that the viscosity at 25°C of the dispersion for forming a ceramic sintered body falls within the range of a viscosity at 25°C described later.

In a preferred embodiment of the present invention, the dispersion for forming a ceramic sintered body further contains the component (E): an acid, and the component (F): a thickener.

[Component (G): component other than components (A) to (F) described above]

The dispersion for forming a ceramic sintered body according to an embodiment of the present invention may further contain, as a component (G), a component other than the components (A) to (F) described above as long as the effect of the present invention is not impaired. The component (G) is not particularly limited, but examples thereof include a base (a basic compound, an alkali), a salt, a chelating agent, an antifoaming agent, an organic solvent, and the like.

The content of the component (G) is not particularly limited as long as the effect of the present invention is obtained, but is preferably less than 10 mass%, more preferably less than 5 mass%, and still more preferably 0 mass% with respect to the total mass of the dispersion for forming a ceramic sintered body.

[pH]

The pH at 25°C of the dispersion for forming a ceramic sintered body according to an embodiment of the present invention is 4.0 or more. When the pH at 25°C is less than 4.0, bleeding-out of some components occurs during the formation of a ceramic sintered body, and non-uniformity of components may occur. The pH at 25°C of the dispersion for forming a ceramic sintered body is more preferably more than 4.0, and still more preferably 4.1 or more. Within these ranges, the occurrence of bleeding-out of some components during the formation of a ceramic sintered body can be further prevented. The pH at 25°C of the dispersion for forming a ceramic sintered body is preferably 12.0 or less, more preferably 7.0 or less, still more preferably 6.0 or less, and particularly preferably 5.5 or less. Within these ranges, thickening due to dehydration condensation of the resin can be further prevented, and the possibility of occurrence of excessive thickening of the dispersion is further reduced, so that a dispersion more suitable for coating or impregnation is obtained. The pH at 25°C of the dispersion for forming a ceramic sintered body can be measured using a pH meter, and specifically, can be measured by the method described in examples. From these, examples of the pH at 25°C of the dispersion for forming a ceramic sintered body include 4.0 or more and 12.0 or less, 4.0 or more and 7.0 or less, more than 4.0 and 6.0 or less, 4.1 or more and 5.5 or less, and the like, but the pH at 25°C of the dispersion for forming a ceramic sintered body is not limited to these.

[Viscosity]

The viscosity at 25°C of the dispersion for forming a ceramic sintered body is not particularly limited, but is preferably 0.01 Pa·s or more, more preferably 0.05 Pa·s or more, and still more preferably 0.1 Pa·s or more. Within these ranges, the moldability of the green sheet formed using the dispersion for forming a ceramic sintered body can be further improved. The viscosity at 25°C of the dispersion for forming a ceramic sintered body is not particularly limited, but is preferably 100 Pa·s or less, more preferably 50 Pa·s or less, and still more preferably 30 Pa·s or less. Within these ranges, the coatability of the dispersion for forming a ceramic sintered body is improved, and further, it becomes easier to impregnate a ceramic fiber with the dispersion for forming a ceramic sintered body. The viscosity at 25°C of the dispersion for forming a ceramic sintered body can be measured using a B-type viscometer, and specifically, can be measured by the method described in examples. Examples of the range of the viscosity at 25°C of the dispersion for forming a ceramic sintered body include, but are not limited to, 0.01 Pa·s or more and 100 Pa·s or less, 0.05 Pa·s or more and 50 Pa·s or less, 0.1 Pa·s or more and 30 Pa·s or less, and the like. The viscosity at 25°C of the dispersion for forming a ceramic sintered body may be, for example, 15 Pa·s or more and 25 Pa·s or less, or 20 Pa·s or more and 25 Pa·s or less.

[Method for producing dispersion]

The method for producing a dispersion for forming a ceramic sintered body includes mixing the component (A): ceramic particles, the component (B): a resin, the component (C): a plasticizer, and the component (D): water. Another aspect of the present invention can also be said to be a method for producing a dispersion having a pH at 25°C of 4.0 or more, the method including mixing the component (A): ceramic particles, the component (B): a resin, the component (C): a plasticizer, and the component (D): water. The method for producing a dispersion for forming a ceramic sintered body may further include further mixing another component (for example, the component (E), the component (F), or the component (G)) as necessary.

The component (A) is preferably added as a dispersion containing the component (A) and the component (D). The component (B) is preferably added as a dispersion or a solution containing the component (B) and the component (D). Thus, the method for producing a dispersion for forming a ceramic sintered body preferably includes mixing a dispersion containing the component (A) and the component (D), a dispersion or a solution containing the component (B) and the component (D), and at least one selected from the group consisting of the component (C), a solution containing the same, and a dispersion containing the same. A preferred embodiment of the present invention can also be said to be a method for producing a dispersion having a pH at 25°C of 4.0 or more, including mixing a dispersion containing the component (A) and the component (D), a dispersion or a solution containing the component (B) and the component (D), and the component (C) or a solution thereof or a dispersion thereof (a dispersion liquid thereof).

In the dispersion containing the component (A) and the component (D), the content (concentration) of the component (A) in the dispersion is not particularly limited, but is preferably 5 mass% or more, more preferably 20 mass% or more, and still more preferably 40 mass% or more with respect to the total mass of the dispersion. In the dispersion containing the component (A) and the component (D), the content (concentration) of the component (A) in the dispersion is not particularly limited, but is preferably 90 mass% or less, more preferably 85 mass% or less, still more preferably 80 mass% or less, and particularly preferably 75 mass% or less with respect to the total mass of the dispersion. From these, examples of the range of the content (concentration) of the component (A) in the dispersion containing the component (A) and the component (D) include, but are not limited to, 5 mass% or more and 90 mass% or less, 20 mass% or more and 85 mass% or less, 40 mass% or more and 80 mass% or less, 40 mass% or more and 75 mass% or less, and the like with respect to the total mass of the dispersion containing the component (A) and the component (D).

In the dispersion or the solution containing the component (B) and the component (D), the content (concentration) of the component (B) in the dispersion or the solution is not particularly limited, but is preferably 1 mass% or more, more preferably 5 mass% or more, and still more preferably 10 mass% or more with respect to the total mass of the dispersion or the dispersion. In the dispersion or the solution containing the component (B) and the component (D), the content (concentration) of the component (B) in the dispersion or the solution is not particularly limited, but is preferably 60 mass% or less, more preferably 40 mass% or less, and still more preferably 30 mass% or less with respect to the total mass of the dispersion or the solution. From these, examples of the range of the content (concentration) of the component (B) in the dispersion or the solution containing the component (B) and the component (D) include, but are not limited to, 1 mass% or more and 60 mass% or less, 5 mass% or more and 40 mass% or less, 10 mass% or more and 30 mass% or less, and the like with respect to the total mass of the dispersion or the solution containing the component (B) and the component (D).

Each of the dispersion containing the component (A) and the component (D) and the dispersion or the solution containing the component (B) and the component (D) may further contain another component (for example, the component (E), the component (F), or the component (G)) as necessary. Among them, the dispersion containing the component (A) and the component (D) preferably further contains the component (E): an acid. The component (E) is preferably added to the dispersion containing the component (A) and the component (D) as a solution (an aqueous acid solution) containing the component (E) and the component (D).

When the aqueous acid solution is added to the dispersion containing the component (A) and the component (D), the content (concentration) of the component (E) in the aqueous acid solution is not particularly limited. The content of the component (E) in the aqueous acid solution is preferably 0.00001 mass% or more, more preferably 0.00005 mass% or more, and still more preferably 0.0001 mass% or more with respect to the total mass of the aqueous acid solution. The content of the component (E) in the aqueous acid solution is preferably 10 mass% or less, more preferably 5 mass% or less, and still more preferably 2.5 mass% or less with respect to the total mass of the aqueous acid solution. From these, examples of the range of the content of the component (E) in the aqueous acid solution include, but are not limited to, 0.00001 mass% or more and 10 mass% or less, 0.00005 mass% or more and 5 mass% or less, 0.0001 mass% or more and 2.5 mass% or less, and the like with respect to the total mass of the aqueous acid solution.

The content (concentration) of the component (E) in the aqueous acid solution is not particularly limited, but is preferably such an amount that a pH at 25°C of the resulting dispersion for forming a ceramic sintered body is 4.0 or more. In addition, an amount that makes the pH at 25°C of the resulting dispersion for forming a ceramic sintered body fall within the above-mentioned preferred range is more preferred.

The means for mixing the respective components in the production of the dispersion for forming a ceramic sintered body is not particularly limited. Examples of the mixing means include known kneading stirrers such as a rotation-revolution type stirrer (a rotation-revolution type mixer) and a planetary mixer, and the like. As a commercially available product, for example, product name: Awatori Rentaro ARE-310 manufactured by THINKY CORPORATION, or the like can be used.

The conditions for mixing the respective components in the production of the dispersion for forming a ceramic sintered body are not particularly limited. The mixing temperature is not particularly limited, and examples thereof include 10°C or higher and 40°C or lower, and the like, but heating may be performed to increase the mixing rate. The mixing time is not particularly limited, but is preferably 10 seconds or more and 60 minutes or less, more preferably 30 seconds or more and 10 minutes or less, and the like. Mixing may be performed under vacuum from the viewpoint of preventing the occurrence of bubbles during mixing.

<Green sheet for forming ceramic sintered body> Another aspect of the present invention relates to a green sheet for forming a ceramic sintered body (hereinafter also simply referred to as a "green sheet")

formed from the dispersion for forming a ceramic sintered body. That is, the green sheet according to this embodiment is characterized by being formed from the dispersion for forming a ceramic sintered body having a pH at 25°C of 4.0 or more.

Examples of the green sheet according to a preferred embodiment of the present invention include a green sheet formed from the dispersion for forming a ceramic sintered body having a pH at 25°C of 4.0 or more (preferably, the above-mentioned preferred range of pH at 25°C) and containing the component (A): ceramic particles, the component (B): a resin, and the component (C): a plasticizer, and the like. Examples of the green sheet according to a more preferred embodiment of the present invention include a green sheet formed from the dispersion for forming a ceramic sintered body having a pH at 25°C of 4.0 or more (preferably, the above-mentioned preferred range of pH at 25°C) and the viscosity at 25°C in the above-mentioned preferred range, and containing the component (A): ceramic particles, the component (B): a resin, and the component (C): a plasticizer, and the like. The green sheet may further contain another component (for example, the component (E), the component (F), or the component (G)) as necessary. The explanation of the component (A), the component (B), the component (C), and other components (for example, the component (E), the component (F), and the component (G)) is as in the above-mentioned dispersion for forming a ceramic sintered body.

The content ratio between the component (A) and the component (B) in the green sheet and the content ratio between the component (A) and the component (C) in the green sheet are not particularly limited, but preferred ranges are the same as those in the above-mentioned explanation of the dispersion for forming a ceramic sintered body.

The film thickness (dry film thickness) of the green sheet is not particularly limited, but is preferably 1 $\mu$m or more and 500 $\mu$m or less, more preferably 10 $\mu$m or more and 450 $\mu$m or less, and still more preferably 20 $\mu$m or more and 300 $\mu$m or less.

The method for producing a green sheet is not particularly limited, and a known method can be used. Among them, a method by application is preferred. Examples of the method include a method including a step of applying the dispersion for forming a ceramic sintered body (preferably, a step of applying the dispersion for forming a ceramic sintered body to a substrate), a method including a step of obtaining a dispersion for forming a ceramic sintered body by the method for producing a dispersion for forming a ceramic sintered body and a step of applying the obtained dispersion for forming a ceramic sintered body (preferably, a step of applying the obtained dispersion for forming a ceramic sintered body to a substrate), and the like.

The application method is not limited, and a known method can be used. Examples thereof include an applicator coating method, a bar coating method, a die coater method, a comma coating method, a gravure roll coater method, a blade coater method, a spray coater method, an air knife coating method, a dip coating method, a transfer method, and the like.

The applied film thickness (wet film thickness) of the dispersion for forming a ceramic sintered body is not particularly limited, but is preferably 10 $\mu$m or more, more preferably 50 $\mu$m or more, and still more preferably 100 $\mu$m or more. The applied film thickness (wet film thickness) of the dispersion for forming a ceramic sintered body is not particularly limited, but is preferably 2000 $\mu$m or less, more preferably 1800 $\mu$m or less, and still more preferably 1500 $\mu$m or less. Within these ranges, a dispersion that enables the production at low cost with less load in the drying step is obtained. From these, examples of the range of the applied film thickness (wet film thickness) of the dispersion for forming a ceramic sintered body include, but are not limited to, 10 μm or more and 2000 μm or less, 50 μm or more and 1800 μm or less, 100 μm or more and 1500 μm or less, and the like.

The application is preferably performed by applying the dispersion for forming a ceramic sintered body to a substrate. The substrate is not particularly limited, but for example, a resin film such as a polyolefin film (a polyethylene film, a polypropylene film, or the like), a polyester film (a polyethylene terephthalate (PET) film, a polyethylene naphthalate film, or the like), or a polyvinyl chloride film is preferably used.

The substrate may be used only for the production of a green sheet, or may be used, for example, as a support for improving handleability, a protective film, or the like after the production.

The film thickness of the substrate is not particularly limited, but is preferably 10 μm or more, and more preferably 20 μm or more. The film thickness of the substrate is not particularly limited, but is preferably 300 μm or less, and more preferably 150 μm or less. Within these ranges, the supportability for the green sheet, the windability into rolls, and the like are further improved. From these, examples of the range of the film thickness of the substrate include, but are not limited to, 10 μm or more and 300 μm or less, 20 μm or more and 150 μm or less, and the like.

After the application of the dispersion for forming a ceramic sintered body, the obtained coating film is preferably dried. The drying conditions are not particularly limited, and suitable conditions can be appropriately adopted.

<Prepreg material for forming ceramic sintered body>

Another aspect of the present invention relates to a prepreg material for forming a ceramic sintered body (hereinafter also simply referred to as a "prepreg material") formed using the dispersion for forming a ceramic sintered body.

In the present description, the prepreg material refers to a composite material in a semi-cured state produced by impregnating a ceramic fiber with a resin or a resin-containing composition. The prepreg material may be a composite material in a semi-cured state produced by further drying as necessary after impregnation with a resin or a resin-containing composition.

The prepreg material preferably contains a ceramic fiber, and a resin-containing composition which is formed from the dispersion for forming a ceramic sintered body having a pH at 25°C of 4.0 or more (preferably, the above-mentioned preferred range of pH at 25°C) and contains the component (A): ceramic particles, the component (B): a resin, and the component (C): a plasticizer. The prepreg material more preferably contains a ceramic fiber, and a resin-containing composition which is formed from the dispersion for forming a ceramic sintered body having a pH at 25°C of 4.0 or more (preferably, the above-mentioned preferred range of pH at 25°C) and the viscosity at 25°C in the above-mentioned preferred range, and contains the component (A): ceramic particles, the component (B): a resin, and the component (C): a plasticizer. The resin-containing composition may further contain another component (for example, the component (E), the component (F), or the component (G)) as necessary. The explanation of the component (A), the component (B), the component (C), and other components (for example, the component (E), the component (F), and the component (G)) is as in the above-mentioned dispersion for forming a ceramic sintered body.

The content ratio between the component (A) and the component (B) in the resin-containing composition and the content ratio between the component (A) and the component (C) in the resin-containing composition are not particularly limited, but preferred ranges are the same as those in the above-mentioned explanation of the dispersion for forming a ceramic sintered body.

The ceramic fiber is not particularly limited as long as it is substantially made of a ceramic. Here, the content ratio of the ceramic in the ceramic fiber is preferably 80 mass% or more, more preferably 90 mass% or more, and still more preferably 100 mass% with respect to the total mass of the ceramic fiber (upper limit: 100 mass%). The content ratio of the ceramic in the ceramic fiber can be evaluated based on a change in weight measured by thermogravimetric analysis.

The ceramic constituting the ceramic fiber is not particularly limited, and examples thereof include materials used for known ceramic fibers. Examples thereof include glass, silicon carbide, alumina, silica, mullite, carbon, and the like. Further, examples thereof include oxides or composite oxides of Si, Ti, Zr, Mg, Hf, Al, and rare earth elements described in WO 2012/077787 A, and the like. As the ceramic constituting the ceramic fiber, one type may be used alone or two or more types may be used in combination.

The ceramic fiber is preferably a fiber substrate. Among them, a glass cloth, an alumina fiber substrate, a SiC fiber substrate, a carbon fiber substrate, and a fiber substrate containing alumina and SiC are preferred.

As the ceramic fiber, a commercially available product may be used, or a produced product may be used. The commercially available product is not particularly limited, but examples thereof include Nextel (registered trademark) 720 fabric type EF-11 manufactured by 3M Company, and the like.

As the ceramic fiber, one type may be used alone or two or more types may be used in combination.

A preferred embodiment of the present invention relates to a prepreg material for forming a ceramic sintered body, which is formed using the green sheet for forming a ceramic sintered body (a green sheet for forming a ceramic sintered body formed from the dispersion for forming a ceramic sintered body). That is, the prepreg material according to the aspect is characterized by being formed using a green sheet formed using the dispersion for forming a ceramic sintered body having a pH at 25°C of 4.0 or more.

The prepreg material according to the present aspect is preferably formed using a green sheet and a ceramic fiber. In the prepreg material according to the present aspect, the green sheet constitutes a resin-containing composition.

The method for producing the prepreg material according to the present aspect is not particularly limited, and a known method can be used. Examples thereof include a method including a step of laminating a fiber substrate and the green sheet, a method including a step of obtaining a green sheet by the method for producing a green sheet, and a step of laminating a fiber substrate and the obtained green sheet, and the like. Examples thereof include a method including a step of subjecting a fiber substrate and the green sheet to heat-and-pressure lamination, a method including a step of obtaining a green sheet by the method for producing a green sheet, and a step of subjecting a fiber substrate and the obtained green sheet to heat-and-pressure lamination, and the like. The green sheet may be subjected to heat-and-pressure lamination from one surface side of the fiber substrate or may be subjected to heat-and-pressure lamination from both surface sides.

Another preferred embodiment of the present invention relates to a prepreg material for forming a ceramic sintered body, which is formed by impregnating a ceramic fiber with the dispersion for forming a ceramic sintered body. That is, the prepreg material according to the aspect is characterized by being formed by impregnating a ceramic fiber with the dispersion for forming a ceramic sintered body having a pH at 25°C of 4.0 or more.

The method for producing the prepreg material according to the present aspect is not particularly limited, and a known method can be used. Examples thereof include a method including a step of impregnating a ceramic fiber with a dispersion for forming a ceramic sintered body and removing a solvent, a method including a step of obtaining a dispersion for forming a ceramic sintered body by the method for producing a dispersion for forming a ceramic sintered body, and a step of impregnating a ceramic fiber with the obtained dispersion for forming a ceramic sintered body and removing a solvent, and the like. The impregnation method is not particularly limited, but can be performed, for example, by immersion, application, or the like, and may be repeated a plurality of times as necessary. The method for removing a solvent is not particularly limited, but can be performed, for example, by evaporating the solvent by a known drying treatment.

The method for producing a prepreg material may be a method including a step of subjecting a fiber substrate and a green sheet to heat-and-pressure lamination, and a step of impregnating a ceramic fiber with a dispersion for forming a ceramic sintered body, and removing a solvent by evaporation in a drying step.

The prepreg material may further include another member.

<Ceramic sintered body>

Another aspect of the present invention relates to a ceramic sintered body formed using the dispersion for forming a ceramic sintered body.

A preferred embodiment of the present invention relates to a ceramic sintered body formed from the prepreg agent for forming a ceramic sintered body.

The method for producing a ceramic sintered body is not particularly limited, but examples thereof include a method including a step of sintering the prepreg material, a method including a step of obtaining a prepreg material by the method for producing a prepreg material, and a step of sintering the obtained prepreg material, and the like. By such a method, it is possible to obtain a ceramic/ceramic composite material which is a ceramic matrix composite material (CMC: Ceramic Matrix Composites) using a ceramic fiber as a reinforcement material and in which a matrix is also made of a ceramic.

Although the embodiments of the present invention have been described in detail, this is illustrative and exemplary and not restrictive, and it is clear that the scope of the present invention should be interpreted by the appended claims.

The present invention includes the following aspects and embodiments.

[1] A dispersion for forming a ceramic sintered body, containing components (A) to (D) below and having a pH at 25°C of 4.0 or more:

a component (A): ceramic particles,
a component (B): a resin,
a component (C): a plasticizer, and
a component (D): water.

[2] The dispersion for forming a ceramic sintered body according to [1], wherein the component (A) contains ceramic particles containing at least one selected from a group consisting of an oxide and a carbide.
[3] The dispersion for forming a ceramic sintered body according to [2], wherein the ceramic particles containing a carbide contain ceramic particles containing silicon carbide.

[4] The dispersion for forming a ceramic sintered body according to [2] or [3], wherein the ceramic particles containing an oxide contain ceramic particles containing at least one selected from a group consisting of alumina and mullite.

[5] The dispersion for forming a ceramic sintered body according to any one of [1] to [4], wherein the component (B) contains a resin having a hydroxy group.

[6] The dispersion for forming a ceramic sintered body according to [5], wherein the resin having a hydroxy group contains at least one or more resins selected from a group consisting of polyvinyl alcohol (PVA), polyvinyl butyral (PVB), polyvinyl propyral, polyvinyl acetal, polyvinyl formal, a hydroxy group-containing glyoxal resin, a hydroxy group-containing acrylic resin, a phenol resin, a hydroxy group-containing polyvinylpyrrolidone (PVP), a hydroxy group-containing polyester, a hydroxy group-containing silicone, and a hydroxy group-containing polycarboxylic acid.

[7] The dispersion for forming a ceramic sintered body according to any one of [1] to [6], wherein the component (C) contains at least one compound selected from a group consisting of ethylene glycol, diethylene glycol, triethylene glycol, polyethylene glycol, glycerin, triethanolamine, and dibutyl phthalate.

[8] The dispersion for forming a ceramic sintered body according to any one of claims [1] to [7], further containing a component (E): an acid, and a component (F): a thickener.

[9] A green sheet for forming a ceramic sintered body, formed from the dispersion for forming a ceramic sintered body according to any one of [1] to [8].

[10] A prepreg material for forming a ceramic sintered body, formed using the green sheet for forming a ceramic sintered body according to [9].

[11] A prepreg material for forming a ceramic sintered body, formed by impregnating a ceramic fiber with the dispersion for forming a ceramic sintered body according to any one of [1] to [8].

[12] A ceramic sintered body, formed from the prepreg agent for forming a ceramic sintered body according to [10] or [11].

Examples

The present invention will be described in more detail using the following examples and comparative examples. However, the technical scope of the present invention is not limited only to the following examples. Unless otherwise specified, "%" and "part(s)" mean "mass%" and "part(s) by mass", respectively.

<Preparation of dispersion>

[Preparation of ceramic particles]

(Alumina particles 1)

As alumina particles 1, alumina particles (product name: WA #30000 manufactured by FUJIMI INCORPORATED, powder) having an average secondary particle size of 0.3 um were prepared.

(Alumina particles 2)

As alumina particles 2, alumina particles (powder) having an average secondary particle size of 0.4 um were prepared.

(Aluminum hydroxide-coated SiC particles)

A 20 mass% aqueous dispersion liquid of silicon carbide (SiC) particles (product name: GC #40000, average secondary particle size: 0.36 um, manufactured by FUJIMI INCORPORATED, powder) was prepared, and a 1 M aqueous NaOH solution was added so that the pH was 10.0. Subsequently, a 30 mass% aqueous dispersion liquid of sodium aluminate was prepared, and the aqueous dispersion liquid of sodium aluminate in an amount such that sodium aluminate was 25 parts by mass with respect to 100 parts by mass of SiC particles and a 9.9 mass% aqueous hydrochloric acid solution were added over 45 minutes with stirring so as to maintain the pH in a range of 9.0 or more and 11.0 or less. Thereafter, the mixture was further stirred for 45 minutes, and then a 9.9 mass% aqueous hydrochloric acid solution was added so that the pH was 10.5, thereby preparing an aqueous dispersion liquid containing particles. Thereafter, a 9.9 mass% aqueous hydrochloric acid solution was added so that the pH was 3.0, and the mixture was concentrated by suction filtration, thereby obtaining an aqueous dispersion 4a in which the concentration of SiC particles coated with a coating layer containing aluminum hydroxide (aluminum hydroxide-coated SiC particles, average secondary particle size: 0.48 um) was 50 mass%. The pH was measured at 25°C using a pH meter (model number: F-71) manufactured by HORIBA, Ltd.

(Composition and structure analysis of particles in aqueous dispersion 4a)

It was verified by the following analysis that the particles in the aqueous dispersion 4a were aluminum hydroxide-coated SiC particles.

About 2 mL of the aqueous dispersion 4a obtained above was collected and added dropwise onto a filter (Nuclepore 5 um) (manufactured by Whatman plc). Subsequently, suction filtration was performed, and then the powder was washed on the filter using 10 mL of pure water, and the particles were dried. Then, the particles after drying were collected on a Si wafer, and observed by SEM (Scanning Electron Microscope)-EDX (Energy Dispersive X-ray Spectroscopy) using a scanning electron microscope SU-8000 manufactured by Hitachi High-Technologies Corporation.

Further, the particles after drying were collected on a carbon tape, and subjected to EELS (Electron Energy Loss Spectroscopy) analysis using TITAN80-300 manufactured by FEI Company.

In the SEM-EDX observation of the particles, C, Al, and O were selected as the elements to be observed, and when it was verified that the EDX spectrum of Al was observed and the positions where the EDX spectra of C, Al, and O were observed clearly corresponded to the positions where the particles were observed in the SEM observation image, it was determined that the SiC particles are coated with a component containing Al and O.

In addition, in the EELS analysis of the particles, when it was verified that the observed EELS spectrum had a spectral shape (a shape different from the spectrum of Al or other Al and O-containing compounds) specific to the EELS standard spectrum of aluminum hydroxide ($Al(OH)_3$), it was determined that the Al and O-containing component contains $Al(OH)_3$.

[Preparation of dispersion]

(Dispersion 1)

An aqueous dispersion in which the concentration of the alumina particles 1 is 55 mass% was prepared, and 100 g of the aqueous dispersion in which the concentration of the alumina particles 1 is 55 mass% was added to 10 g of an aqueous hydrochloric acid solution having a concentration of 2.5 mass% with stirring, thereby obtaining an aqueous dispersion 1a of alumina particles. Subsequently, 80 g of the aqueous dispersion 1a obtained above was weighed, and 80 g of the aqueous dispersion 1a, 79.5 g of an aqueous polyvinyl acetal solution having a concentration of 20 mass% (product name: S-LEC (registered trademark) KW-3, manufactured by Sekisui Chemical Co., Ltd., weight average molecular weight 13,000) as a resin, and 7.95 g of polyethylene glycol (product name: polyethylene glycol 200, manufactured by FUJIFILM Wako Pure Chemical Corporation, average molecular weight: 200) as a plasticizer were kneaded for 2 minutes using a rotation-revolution type mixer (product name: Awatori Rentaro ARE-310, manufactured by THINKY CORPORATION), thereby obtaining a dispersion 1 having a pH of 4.1.

(Dispersing medium 2)

A dispersion 2 having a pH of 5.5 was obtained in the same manner as in the preparation of the dispersion 1 except that the alumina particles used were changed from the alumina particles 1 to the alumina particles 2, and the aqueous hydrochloric acid solution used and the amount thereof were changed from 10 g of an aqueous hydrochloric acid solution having a concentration of 2.5 mass% to 10 g of an aqueous hydrochloric acid solution having a concentration of 0.5 mass%.

(Dispersion 3)

A dispersion 3 having a pH of 4.7 was obtained in the same manner as in the preparation of the dispersion 2 except that the amount of the aqueous hydrochloric acid solution used was increased.

(Dispersion 4)

A dispersion 4 having a pH of 4.4 was obtained in the same manner as in the preparation of the dispersion 1 except that the aqueous dispersion 4a obtained above was used in place of the aqueous dispersion 1a.

(Dispersion 5)

A dispersion 5 having a pH of 3.4 was obtained in the same manner as in the preparation of the dispersion 1 except that the amount of the aqueous hydrochloric acid solution used was increased.

(Dispersion 6)

A dispersion 6 having a pH of 3.2 was obtained in the same manner as in the preparation of the dispersion 1 except that the amount of the aqueous hydrochloric acid solution used was increased.

(Dispersion 7)

A dispersion 7 having a pH of 3.6 was obtained in the same manner as in the preparation of the dispersion 2 except that the amount of the aqueous hydrochloric acid solution used was increased.

(Dispersion 8)

A dispersion 8 having a pH of 3.0 was obtained in the same manner as in the preparation of the dispersion 2 except that the amount of the aqueous hydrochloric acid solution used was increased.

(Dispersion 9)

A dispersion 9 having a pH of 3.9 was obtained in the same manner as in the preparation of the dispersion 4 except that an aqueous hydrochloric acid solution having a concentration of 2.5 mass% was further added to the aqueous dispersion 4a, and then the obtained aqueous dispersion, an aqueous polyvinyl acetal solution having a concentration of 20 mass% (product name: S-LEC (registered trademark) KW-3, manufactured by Sekisui Chemical Co., Ltd., weight average molecular weight 13,000) as a resin, and polyethylene glycol as a plasticizer were mixed.
The obtained dispersions 1 to 9 are dispersions containing the component (A): ceramic particles (alumina particles 1, alumina particles 2 or aluminum hydroxide-coated SiC particles), the component (B): polyvinyl acetal, the component (C): polyethylene glycol, the component (D): water, and the component (E): hydrochloric acid.

(Measurement of pH)

In the preparation of the dispersion, the pH was measured at 25°C using a pH meter (model number: F-71) manufactured by HORIBA, Ltd.

(Measurement of weight average molecular weight of resin)

The weight average molecular weight of the resin used in the preparation of the dispersion was measured as a value in terms of polyethylene oxide by gel permeation chromatography (GPC) under the following measurement conditions:

<<GPC measurement conditions>>

    Sample concentration: 0.1 mass%
    Column: "TSKgel GMPWXL" manufactured by Tosoh Corporation
    Detector: a differential refractometer
    Eluent: a 100 mM aqueous sodium nitrate solution
    Flow rate: 1 mL/min
    Measurement temperature: 40°C
    Sample injection amount: 200 $\mu$L
    Measuring apparatus: "HLC-8320GPC" manufactured by Tosoh Corporation.

(Measurement of molecular weight of plasticizer)

The average molecular weight of the plasticizer used in the preparation of the dispersion was calculated from the result of the hydroxyl value measurement by a neutralization titration method based on JIS K 0070:1992. More specifically, the calculation was performed by the following procedure:

    (1) Operation: With respect to 0.6 g of the plasticizer, the hydroxyl value was determined according to "Test methods for acid value, saponification value, ester value, iodine value, hydroxyl value and unsaponifiable matter of chemical products 7.1 Neutralization Titration Method" in JIS K 0070:1992;

(2) Calculation: The average molecular weight was calculated from the following formula:

$$A = (56106/B) \times 2$$

A: Average molecular weight

B: Hydroxyl value determined in the above (1) (unit: mgKOH/g)

56106: a coefficient based on the molecular weight of potassium hydroxide.

<Production of green sheet for forming ceramic sintered body>

[Production of green sheet]

A thickener (product name: SENKA ACTGEL CM100, manufactured by SENKA corporation) was added to each of the dispersions 1 to 9 obtained above so that the viscosity at 25°C measured with a B-type viscometer (product name: VISCOMETER TVB-10, spindle used No. 6, rotation speed: 6 rpm, measurement time: 45 seconds) became the value in Table 1 below, and the mixture was kneaded for 2 minutes using a rotation-revolution type mixer (product name: Awatori Rentaro ARE-310, manufactured by THINKY CORPORATION), then left to stand at room temperature for 24 hours, and then kneaded again for 4 minutes to adjust the viscosity of each dispersion. Then, each dispersion after viscosity adjustment was formed into a sheet on a PET film (thickness: 100 um) using an applicator with a gap of 900 $\mu$m, thereby obtaining green sheets 1 to 9 in the form of a laminate of the PET film and the green sheet.

The change in pH at 25°C due to the addition of the thickener to the dispersion was not observed. The pH was measured at 25°C using a pH meter (model number: F-71) manufactured by HORIBA, Ltd.

[Thickening effect test]

An aqueous dispersion (a dispersion consisting of alumina particles and water) of alumina particles (product name: WA #30000, manufactured by FUJIMI INCORPORATED, average secondary particle size: 0.3 $\mu$m) having an alumina particle concentration of 25 mass% was prepared. Subsequently, 100 g of the aqueous dispersion having an alumina particle concentration of 25 mass% was added to 5 g of an aqueous hydrochloric acid solution having a concentration of 2.5 mass% with stirring. Subsequently, to the obtained aqueous dispersion (the aqueous dispersion containing alumina particles and hydrochloric acid), the thickener was added in an amount of 4 parts by mass or less with respect to 100 parts by mass of alumina particles, and then the viscosity at 25°C was measured in the same manner as described above using a B-type viscometer.

As a result, when the thickener was added in an amount of 4 parts by mass with respect to 100 parts by mass of alumina particles to the obtained aqueous dispersion (the aqueous dispersion containing alumina particles and hydrochloric acid), the viscosity at 25°C was 13.2 Pa·s. When a thickening effect test was performed in the same manner except that the resin and the additive (the plasticizer) were used in place of the thickener, the viscosity at 25°C of the aqueous dispersion of alumina particles containing these was significantly lower than 1 Pa·s in each case, and it was difficult to obtain an accurate value by this measurement.

[Bending test]

It was verified as follows that polyethylene glycol functions as a plasticizer in the green sheets 1 to 9 for forming a ceramic sintered body.

A dispersion was prepared in the same manner as the dispersion 1 except that polyethylene glycol was not added. A green sheet was produced using the prepared dispersion by a method similar to the method for producing a green sheet so that the thickness of the obtained green sheet was 150 um. The green sheet was produced in the form of a laminate of a PET film and a green sheet. The obtained laminate of the PET film and the green sheet was cut, and the PET film was peeled off to prepare a test green sheet having a long side of 5 cm × a short side of 1.5 cm × a thickness of 150 um, and a bending test was performed such that the test green sheet was bent at the center position of the long side. As a result, the obtained green sheet had low flexibility and could not be bent at an angle of 170° while maintaining the structure. In addition, a green sheet was produced using the dispersion 1 by a method similar to the method for producing a green sheet so that the thickness of the obtained green sheet was 150 um. When the produced green sheet was subjected to a bending test in the same manner, the green sheet could be bent at an angle of 170° while maintaining the structure. From this, it was verified that in the green sheet 1 for forming a ceramic sintered body formed from the dispersion 1, polyethylene glycol improves the flexibility of the green sheet and functions as a plasticizer.

In the same manner, it was verified that polyethylene glycol functions as a plasticizer also for the green sheets 2 to 9 for forming a ceramic sintered body formed from the dispersions 2 to 9.

<Evaluation>

Each of the green sheets 1 to 9 obtained above was wound in the form of a laminate of a PET film and a green sheet, stored in an aluminum bag at 25°C for 24 hours, and then the surface of the green sheet was visually observed to evaluate whether bleeding-out occurred. Bleeding-out was evaluated using the following criteria:

<<Evaluation criteria>>

A: There is no change in color on the surface of the green sheet after storage at 25°C for 24 hours in the aluminum bag.
B: There is a change in color on the surface of the green sheet after storage at 25°C for 24 hours in the aluminum bag.

The evaluation results are shown in Table 1 below.

[Table 1]

| (Table 1) Evaluation results | | | | | | |
|---|---|---|---|---|---|---|
| Green sheet No. | Dispersion used for production | | | | Evaluation results of bleeding-out | Remarks |
| | No. | Type of ceramic particles | pH | Viscosity at 25°C [Pa·s] | | |
| 1 | 1 | Alumina particles 1 | 4.1 | 24.0 | A | Present invention |
| 2 | 2 | Alumina particles 2 | 5.5 | 21.4 | A | Present invention |
| 3 | 3 | Alumina particles 2 | 4.7 | 24.0 | A | Present invention |
| 4 | 4 | Aluminum hydroxide-coated SiC particles | 4.4 | 16.4 | A | Present invention |
| 5 | 5 | Alumina particles 1 | 3.4 | 13.0 | B | Comparative example |
| 6 | 6 | Alumina particles 1 | 3.2 | 16.0 | B | Comparative example |
| 7 | 7 | Alumina particles 2 | 3.6 | 16.1 | B | Comparative example |
| 8 | 8 | Alumina particles 2 | 3.0 | 24.4 | B | Comparative example |
| 9 | 9 | Aluminum hydroxide-coated SiC particles | 3.9 | 13.6 | B | Comparative example |

From the results in Table 1 above, it was verified that the bleeding-out is remarkably improved in the green sheet that is an unsintered intermediate material by using the dispersion for forming a ceramic sintered body, which contains the component (A): ceramic particles, the component (B): a resin, the component (C): a plasticizer, and the component (D): water and has a pH at 25°C of 4.0 or more.

Further, a dispersion 10 having a pH of 3.5 was prepared in the same manner as in the preparation of the dispersion 5 except that the addition amount of polyethylene glycol as a plasticizer was changed to 0 g, and a green sheet 10 was produced in the same manner as in the production of the green sheet 5 using the dispersion 10. Then, when the green sheet 10 was evaluated as to whether bleeding-out occurred in the same manner as described above, it was evaluated as "A", and bleeding-out was not observed. From this result, it is considered that the bleeding out component in the evaluation is mainly polyethylene glycol as a plasticizer. When a bending test was performed in the same manner as described above using the dispersion 10, the green sheet formed from the dispersion 10 could not be bent at an angle of 170° while maintaining the structure.

<Production of prepreg material for forming ceramic sintered body>

(Prepreg material 1-1)

The laminate of the PET film and the green sheet 1 obtained above and ceramic fibers (manufactured by 3M Company, product name: Nextel (registered trademark) 720, fabric type EF-11) were laminated so that the green sheet 1 and the ceramic fibers were in contact with each other, thereby obtaining a prepreg material 1-1 with the PET film.

(Prepreg material 5)

A prepreg material 5 with a PET film was obtained in the same manner as in the production of the prepreg material 1-1 except that the laminate of the PET film and the green sheet 1 used was changed to the laminate of the PET film and the green sheet 5 obtained above.

(Prepreg material 1-2)

Ceramic fibers (manufactured by 3M Company, product name: Nextel (registered trademark) 720, fabric type EF-11) were impregnated with the dispersion 1, and then the ceramic fibers were allowed to pass between two bar coaters to remove the surplus dispersion, and dried, thereby obtaining a prepreg material 1-2.

<Production of sintered body>

(Sintered body 1-1)

The PET film was peeled off from the prepreg material 1-1 with the PET film obtained above. Then, the prepreg material 1-1 was fired while being uniaxially pressurized by a vacuum hot press machine (manufactured by Fujidempa Kogyo Co., Ltd.) to fire the alumina particles contained in the prepreg material, thereby producing a sintered body 1-1. Here, the firing conditions were such that a firing keeping temperature is 1100°C or higher, a pressure is 5 MPa or higher, and a firing keeping time is 60 minutes or longer in an argon atmosphere. During the firing, the temperature was measured at intervals of 2 seconds using a thermocouple thermometer attached with the apparatus.

(Sintered body 5)

A sintered body 5 was obtained in the same manner as in the production of the sintered body 1-1 except that the prepreg material 1-1 with the PET film was changed to the prepreg material 5 with the PET film.

(Sintered body 1-2)

A sintered body 1-2 was obtained in the same manner as in the production of the sintered body 1-1 except that the prepreg material 1-1 with the PET film was changed to the prepreg material 1-2 without the PET film and the PET film was not peeled off.

The present application is based on Japanese Patent Application No. 2022-038109, which has been filed on March 11, 2022, and the disclosure content of which is incorporated herein by reference in its entirety.

**Claims**

1.  A dispersion for forming a ceramic sintered body, comprising components (A) to (D) below and having a pH at 25°C of 4.0 or more:

    a component (A): ceramic particles,
    a component (B): a resin,
    a component (C): a plasticizer, and
    a component (D): water.

2.  The dispersion for forming a ceramic sintered body according to claim 1, wherein the component (A) contains ceramic particles containing at least one selected from a group consisting of an oxide and a carbide.

3. The dispersion for forming a ceramic sintered body according to claim 2, wherein the ceramic particles containing a carbide contain ceramic particles containing silicon carbide.

4. The dispersion for forming a ceramic sintered body according to claim 2 or 3, wherein the ceramic particles containing an oxide contain ceramic particles containing at least one selected from a group consisting of alumina and mullite.

5. The dispersion for forming a ceramic sintered body according to any one of claims 1 to 3, wherein the component (B) contains a resin having a hydroxy group.

6. The dispersion for forming a ceramic sintered body according to claim 5, wherein the resin having a hydroxy group contains at least one or more resins selected from a group consisting of polyvinyl alcohol (PVA), polyvinyl butyral (PVB), polyvinyl propyral, polyvinyl acetal, polyvinyl formal, a hydroxy group-containing glyoxal resin, a hydroxy group-containing acrylic resin, a phenol resin, a hydroxy group-containing polyvinylpyrrolidone (PVP), a hydroxy group-containing polyester, a hydroxy group-containing silicone, and a hydroxy group-containing polycarboxylic acid.

7. The dispersion for forming a ceramic sintered body according to any one of claims 1 to 3, wherein the component (C) contains at least one compound selected from a group consisting of ethylene glycol, diethylene glycol, triethylene glycol, polyethylene glycol, glycerin, triethanolamine, and dibutyl phthalate.

8. The dispersion for forming a ceramic sintered body according to any one of claims 1 to 3, further comprising a component (E): an acid, and a component (F): a thickener.

9. A green sheet for forming a ceramic sintered body, formed from the dispersion for forming a ceramic sintered body according to any one of claims 1 to 3.

10. A prepreg material for forming a ceramic sintered body, formed using the green sheet for forming a ceramic sintered body according to claim 9.

11. A prepreg material for forming a ceramic sintered body, formed by impregnating a ceramic fiber with the dispersion for forming a ceramic sintered body according to any one of claims 1 to 3.

12. A ceramic sintered body, formed from the prepreg agent for forming a ceramic sintered body according to claim 10.

13. A ceramic sintered body, formed from the prepreg agent for forming a ceramic sintered body according to claim 11.

## INTERNATIONAL SEARCH REPORT

International application No.

**PCT/JP2023/003069**

### A. CLASSIFICATION OF SUBJECT MATTER

*C08K 5/04*(2006.01)i; *C08L 101/00*(2006.01)i; *C08L 101/06*(2006.01)i; *C04B 35/111*(2006.01)i; *C04B 35/569*(2006.01)i; *C04B 35/626*(2006.01)i; *C04B 35/634*(2006.01)i; *C08K 3/10*(2018.01)i; *C08K 3/14*(2006.01)i; *C08K 3/20*(2006.01)i
FI:   C04B35/626 250; C04B35/111; C04B35/569; C04B35/634; C08K3/10; C08K3/14; C08K3/20; C08K5/04; C08L101/00; C08L101/06

According to International Patent Classification (IPC) or to both national classification and IPC

### B. FIELDS SEARCHED

Minimum documentation searched (classification system followed by classification symbols)

C04B35/00-C04B35/84

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2019/189254 A1 (FUJIMI INC) 03 October 2019 (2019-10-03) claims, paragraphs [0165]-[0200] | 1-13 |
| X | JP 2006-104014 A (MATSUSHITA ELECTRIC INDUSTRIAL CO., LTD.) 20 April 2006 (2006-04-20) claims, paragraphs [0016]-[0052] | 1-2, 4-10, 12 |
| Y | | 3, 11, 13 |
| Y | JP 2019-524609 A (UNIVERSITÄT BAYREUTH) 05 September 2019 (2019-09-05) paragraphs [0028], [0031] | 3, 11, 13 |
| X | JP 7-82036 A (KYOCERA CORP.) 28 March 1995 (1995-03-28) claims, table 1, paragraph [0024] | 1-2, 4-6, 8 |
| X | CN 108503360 A (SHANGHAI INSTITUTE OF APPLIED PHYSICS, CHINESE ACADEMY OF SCIENCES) 07 September 2018 (2018-09-07) claims, example 1 | 1-2, 7, 9, 10, 12 |

☐ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 March 2023** | **04 April 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

| Patent document cited in search report | | | Publication date (day/month/year) | Patent family member(s) | Publication date (day/month/year) |
|---|---|---|---|---|---|
| WO | 2019/189254 | A1 | 03 October 2019 | US 2021-0139382 A1 claims, paragraphs [0165]-[0203] | |
| JP | 2006-104014 | A | 20 April 2006 | (Family: none) | |
| JP | 2019-524609 | A | 05 September 2019 | US 2019-0210930 A1 paragraphs [0045], [0048] CN 109415267 A | |
| JP | 7-82036 | A | 28 March 1995 | (Family: none) | |
| CN | 108503360 | A | 07 September 2018 | (Family: none) | |

Form PCT/ISA/210 (patent family annex) (January 2015)

**INTERNATIONAL SEARCH REPORT**
Information on patent family members

International application No.

**PCT/JP2023/003069**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012077787 A
- US 20130316891 A
- JP 2008024585 A

- US 20100081556 A
- JP 2017222544 A
- WO 2019065956 A
- JP 2022038109 A

**Non-patent literature cited in the description**

- **PENG-YUAN LEE** ; **TOYOHIKO YANO**. The Influence of Matrix and Fiber/Matrix Interface on Mechanical Properties of Alumina/Alumina Composites. *Journal of the Ceramic Society of Japan*, 2004, vol. 112 (5), S333-S337